# EUROPEAN PATENT APPLICATION

(11) **EP 1 220 166 A1**
(43) Date of publication of application: **03.07.2002**
(21) Application number: 00311777.7
(22) Date of filing: 29.12.2000
(51) Int. Cl.: G07D 9/00, G07F 7/10

(54) **Method and apparatus for receiving and dispensing banknotes**

(71) Applicant: Mars Inc., McLean, VA 22101 (US)
(72) Inventor: Gerlier, André, 74140 Sciez (FR); Moreno, Juan-Jose, 1052 Le Mont-sur-Lausanne (CH)
(74) Representative: Cross, James Peter Archibald

(57) **Abstract**

Value carriers are validated according to their suitability for recirculation and routed to a two-way store (16) if suitable or to an escrow (14) if not. If a current transaction is cancelled, value carriers are transferred from the two-way store (16) to the escrow (14), and the contents of the escrow (14) are dispensed. The two-way store (16) carries value carriers accepted during previous transactions.

## Description

The present invention relates to a method and apparatus for receiving and dispensing banknotes, preferably including discrimination of paid-in banknotes according to suitability for recirculation.

US 4,820,909 discloses apparatus for depositing and dispensing banknotes, in which deposited banknotes are validated for authenticity, denomination and suitability for recirculation. Authentic notes which are of high denomination and suitable for recirculation are accumulated in a first temporary store, while authentic notes which are of low denomination or damaged are accumulated in a second temporary store. If the deposit is cancelled, the banknotes are dispensed from the temporary stores. If the deposit proceeds, the contents of the first temporary store are transferred to a cash box and are available for dispensing in subsequent transactions. while the contents of the second temporary store are transferred to a reject box and are not subsequently available for dispensing.

US 4,726,474 discloses apparatus for depositing and dispensing banknotes, in which deposited banknotes which are judged authentic are separated into damaged and undamaged notes and stored in separate parts of a temporary store. Undamaged notes are separated according to denomination and distributed to separate stores, from which they may be paid out in subsequent transactions.

US 4,883,183 discloses apparatus for depositing and dispensing banknotes, in which deposited authentic banknotes are separated according to whether they are damaged and stored in separate temporary stores, from which they are returned to the customer if the transaction is cancelled. If the transaction proceeds, the undamaged banknotes are stored in separate stores according to denomination and can be dispensed in subsequent transactions, while the damaged banknotes are stored in a different store from which they cannot be dispensed.

All of the above apparatus allow recirculation of undamaged banknotes and include a temporary store from which banknotes which have been deposited in a current transaction can be returned if the transaction is cancelled. However, the temporary store is complex as it includes separate stores for damaged and undamaged banknotes.

According to one aspect of the present invention, there is provided a method and apparatus for depositing and dispensing banknotes, in which deposited banknotes are validated at least for authenticity and condition. Authentic banknotes in poor condition are stored in a temporary store or escrow. Authentic banknotes in good condition are stored in one or more long-term stores, together with banknotes deposited in previous transactions, from which they can be dispensed.

If the depositing transaction is confirmed, the banknotes in the escrow are transferred to a permanent store from which they cannot be dispensed, while the banknotes in good condition remain in the one or more long-term stores.

If the depositing transaction is cancelled, the banknotes in poor condition are dispensed from the escrow. The banknotes in good condition which have been deposited during the current transaction are dispensed from the one or more long-term stores. The banknotes in good condition may be transferred to the escrow and then dispensed together with the banknotes in poor condition.

An advantage of the present invention is that banknotes may be sorted according to condition when they are validated for authenticity, but there is no need for multiple temporary stores or escrows. Instead, the one or more long-term stores also serve as temporary stores for notes in good condition.

Specific embodiments of the present invention will now be described with reference to the accompanying drawings, in which:
Figure 1 is a schematic diagram of a banknote depositing and dispensing apparatus; and

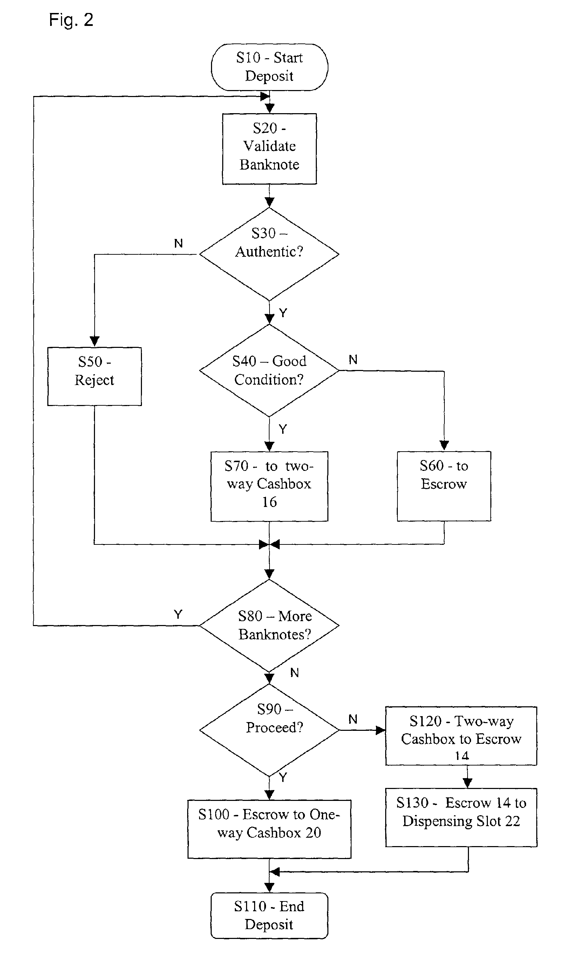

Figure 2 is a flowchart of a depositing operation of the apparatus of Figure 1.

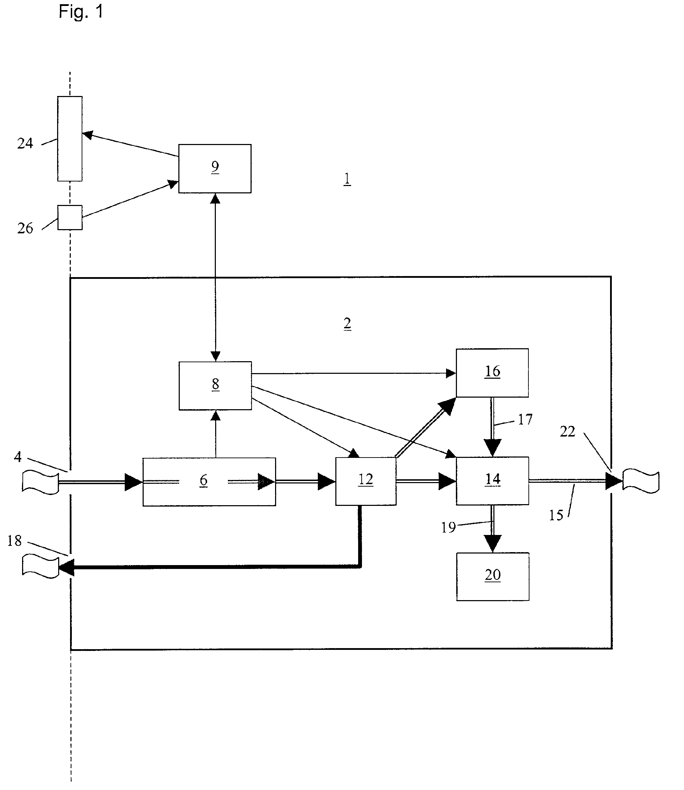

Figure 1 shows a banknote receiving and dispensing apparatus 2, which may form part of an automatic banking machine or a vending machine 1. Thick arrows represent transport paths for banknotes, which may be constructed of any suitable transport means. Thin arrows represent the transmission of signals, by any suitable transmission means. The operation of the receiving and dispensing apparatus 2 is controlled by a validator controller 8, while the functions of the machine as a whole are controlled by a host controller 9 which is connected for duplex communication with the validator controller 8.

A depositing operation is initiated (step S 10), for example by detecting the presence of one or more banknotes in a receiving slot 4 or by receiving input from a user through an input device 26. Banknotes are inserted by a user into the receiving slot 4 and are transported one by one by suitable transport means to a validator 6 (step S20).

The validator 6 measures parameters of each banknote and inputs them to the validator controller 8, where each parameter is compared against a predetermined tolerance range for that parameter. Some of the parameters are used to judge authenticity and denomination of the banknote, while others are used to judge the condition of the banknote. For example, parameters used to judge authenticity and denomination may include the spectrum and/or spatial variation of light reflected by or transmitted through a banknote, or the change in a magnetic field produced by a banknote printed with magnetic ink. Parameters used to judge condition may include the overall or partial transmittance or reflectance of the banknote, irregularity of the edge of the note, or the presence of adhesive tape. A narrower acceptance range of a parameter may be applied for dispensing banknotes than for receiving them, as disclosed in EP-A-706698.

If the banknote is judged authentic (step S30), the validator controller 8 also determines whether the banknote is in good condition (step S40). The validator controller 8 outputs a control signal to a router 12 to direct the banknote to a reject slot 18 if the banknote is not genuine (step S50), to an escrow 14 if the banknote is genuine but in poor condition (S60), or to a two-way cashbox 16 if the banknote is genuine and in good condition (S70). If more than one denomination is to be handled, one two-way cashbox 16 may be provided for each denomination, and the router 12 directs each banknote to one of the two-way cashboxes 16 according to its determined denomination. Alternatively, multiple different denominations may be stored in a single two-way cashbox 16, as described for example in GB 0006407.1.

The escrow 14 may be, for example, a drum escrow of the type described in WO 96/15511.

The host controller 9 receives a signal from the validator controller 8 indicating the value of banknotes accepted as genuine in the current transaction; this may be displayed to the user on a display unit 24. The user may reinsert any rejected banknotes for revalidation. Each banknote present in the receiving slot 4 is validated in succession (step S80).

The host controller 9 may then issue a command to proceed with or cancel the current transaction (step S90), for example in response to a user pressing an appropriate key of an input device 26. If the host controller 9 issues the command to proceed, the validator controller 8 then controls the escrow 14 and a transport mechanism 19 to transfer any banknotes to a one-way cash box 20 which accumulates banknotes in poor condition (step S100), and the deposit transaction is complete (step S110). The one-way cash box 20 may be emptied by an operator but its contents cannot be dispensed to a user.

Alternatively, the host controller 9 may issue a command to cancel the current transaction, for example in response to the user pressing another appropriate key of the input device 26. The current transaction may also be cancelled if the host controller 9 determines that a predetermined period has expired at step S90 without any further user input. The validator controller 8 controls the two-way cashbox 16 and a transfer mechanism 17 to transfer any banknotes stored during the current transaction to the escrow 14 (step S120) and then controls the escrow 14 and a dispensing mechanism 15 to transfer all its contents, including the banknotes in poor condition previously stored in the escrow 14 and the banknotes in good condition transferred from the two-way cashbox 16, to a dispensing slot 22 (step S130). The deposit transaction is then ended (step S110).

The validator controller 8 records how many banknotes have been stored in the or each two-way cashbox 16 during the current transaction and dispenses the same number from the or each two-way cashbox 16 if the transaction is cancelled. When the current transaction ends (step S110), the validator controller 8 resets the recorded number of stored banknotes so that the number can be counted for a new transaction. Alternatively, the two-way cashbox 16 has an internal partition between banknotes deposited in the current transaction and banknotes stored from previous transactions; when the transaction is allowed to proceed (step S90), the partition and/or banknotes are moved so that the currently deposited banknotes are no longer separated from the banknotes stored in previous transactions.

A dispensing operation will now be described. If the apparatus is an automatic banking machine, a dispensing operation may be initiated by the user inserting a bank card and entering security details and an amount to be withdrawn in the input device 26. The host controller 9 may verify the security details via a remote connection (not shown) before commencing the dispensing operation. If the apparatus is a vending machine, the dispensing operation may be initiated to give change if the deposited amount is greater than the price of an item selected by the user.

In the dispensing operation, the host controller 8 determines the monetary amount to be dispensed and controls the or each two-way cashbox 16 to dispense banknotes to that amount. The banknotes may first be loaded into the escrow 14 and then transferred from the escrow 14 to the dispensing slot 22, as shown in Figure 1. Alternatively, where a direct transport path is provided between the two-way cashbox 16 and the dispensing slot, the banknotes are dispensed directly to the dispensing slot 22. Banknotes may be dispensed from a one-way (dispensing only) cashbox instead of or as well as from the two-way cashbox 16.

In the alternative embodiment in which multiple denominations are stored in the same two-way cashbox, the cashbox 16 may allow random access to any banknote stored therein, and the validator controller 8 stores data representing the value and position of each banknote in the two-way cashbox 16. The validator controller 8 selects the required denominations for dispensing by controlling the position within the cashbox 16 from which each banknote is dispensed.

The dispensing slot 22 is shown schematically in Figure 1 as being remote from the receiving slot 4 and reject slot 18, but is preferably physically proximate to, or even coterminous with either or both the other slots.

The banknotes returned from the two-way cashbox 16 if the current transaction is cancelled need not be the same as those stored therein during the current transaction, although this arrangement is preferred because it prevents exchange of undetected counterfeit notes for genuine notes. However, if the two-way cashbox 16 has a first-in first-out arrangement, banknotes may be returned from the two-way cashbox 16 to the value of those stored therein during the current transaction.

Banknotes judged to be forgeries may be stored in a separate one-way store rather than being returned to the reject slot 18; this is a legal requirement in some countries. A receipt may be printed and issued to the user.

Although the above embodiments have been described with reference to banknotes, the present invention is also applicable to other types of value carrier, such as tokens, certificates, coins and the like.

Although the above embodiments include an authenticity test as well as a test for condition, the authenticity test may not be necessary in applications where the authenticity of the value carriers is not in doubt, such as where the apparatus is intended for use by bank staff only.

The controller may be programmed with software to control the operations described in the embodiments. The software may be stored on a carrier, such as a disk or ROM.

## Claims

1. A method of receiving, validating and dispensing value carriers, wherein a transaction is initiated (S10), received value carriers are validated for recirculation (S40), received value carriers which are judged not suitable for recirculation (S40) are stored (S60) in an escrow (14) and, if the current transaction is cancelled (S90), are dispensed (S130) from the escrow (14); **characterised in that**
received value carriers judged suitable for recirculation are stored (S70) in a two-way store (16) together with other value carriers received in previous transactions and, if the current transaction is cancelled (S90), value carriers are dispensed (S120, S130) from the two-way store (16).

2. A method according to claim 1, wherein the value carriers dispensed from the two-way store (16) if the current transaction is cancelled are those received in the current transaction.

3. A method according to claim 1, wherein the value carriers dispensed from the two-way store (16) if the current transaction is cancelled are different from, but of the same total value as, those received during the current transaction.

4. A method according to any preceding claim, wherein, if the current transaction is cancelled (S90), the received value carriers suitable for recirculation are transferred (S120) from the two-way store (16) to the escrow (14) prior to being dispensed (S130).

5. A method according to any preceding claim, wherein, if the current transaction proceeds (S90), the received value carriers stored in the escrow (14) are transferred (S100) to a one-way store (20).

6. A method according to any preceding claim, wherein, if the current transaction proceeds (S90) and the value of the deposited value carriers is greater than required for the current transaction, value carriers are transferred to the escrow (14) and dispensed as change.

7. A method according to any preceding claim, wherein the received value carriers are validated for authenticity (S30) and those judged not authentic are dispensed (S50) without being stored.

8. A method according to any one of claims 1 to 6, wherein the received value carriers are validated for authenticity (S30) and those judged not authentic are stored in a further one-way store.

9. A method according to any preceding claim, wherein the value carriers are banknotes or the like.

10. Apparatus arranged to perform a method according to any preceding claim.

11. A computer program arranged to perform the method according to any one of claims 1 to 9 when executed by suitable hardware.

12. A carrier carrying a computer program according to claim 11.

13. Apparatus for receiving, validating and dispensing value carriers, including:
a validator (6) for validating value carriers according to their suitability for recirculation;
an escrow (14) arranged to store value carriers received from the validator (6);
a two-way store (16) arranged to store value carriers received from the validator;
a router (12) arranged selectively to route value carriers from the validator to the escrow (14) or the two-way store (16);
a transfer mechanism (17) for transferring value carriers from the two-way store (16) to the escrow (14);
a dispensing mechanism (15) for dispensing value carriers from the escrow (14); and a controller (8) arranged to control the router (12) to route those value carriers judged suitable for recirculation to the two-way store (16) and those value carriers judged not suitable for recirculation to the escrow (14).

14. Apparatus as claimed in claim 13, wherein the controller (8) is arranged, if a current transaction is cancelled, to control the transfer mechanism (17) to transfer value carriers from the two-way store (16) to the escrow (14), and subsequently to control the dispensing mechanism (15) to dispense value carriers from the escrow (14).

15. Apparatus as claimed in claim 13 or 14, further including a one-way store (20) and a transport mechanism (19) arranged to transport value carriers from the escrow (14) to the one-way store (20), the controller (8) being arranged to control the transport mechanism (19) to transport value carriers from the escrow (14) to the one-way store (20) if the current transaction is enabled to proceed.

16. Apparatus as claimed in any one of claims 13 to 15, wherein the two-way store (16) is arranged to store value carriers received during the current transaction together with value carriers received during previous transactions.
